# EUROPEAN PATENT APPLICATION

(11) **EP 3 037 844 A1**
(43) Date of publication of application: **29.06.2016**
(21) Application number: 14838407.6
(22) Date of filing: 13.06.2014
(51) Int. Cl.: G01T 7/00

(54) **RADIATION DETECTOR**

(30) Priority: 19.08.2013 JP 2013169698
(71) Applicant: Kabushiki Kaisha Toshiba, Minato-ku Tokyo 105-8001 (JP); Toshiba Electron Tubes & Devices Co., Ltd., Otawara-shi, Tochigi 324-8550 (JP)
(72) Inventor: NAKAYAMA, Takeshi, Otawara-shi Tochigi 324-8550 (JP)
(74) Representative: Henkel, Breuer & Partner
(86) International application number: PCT/JP2014/065777
(87) International publication number: WO 2015/025596

(57) **Abstract**

According to the embodiment, a radiation detector includes a radiation detection part converting incident radiation to signal charge, a circuit part generating a radiation image based on the signal charge, a support plate supporting the radiation detection part on a first surface and supporting the circuit part on a second surface on an opposite side from the first surface, and a heat conduction part provided between a substrate provided in the circuit part and the second surface.

## Description

### [Technical Field]

Embodiments of the invention relates to a radiaton detector.

### [Background Art]

The X-ray detector is one example of the radiation detectors. Most of the X-ray detectors currently in practical use are based on the indirect conversion scheme. In the X-ray detector of the indirect conversion type, X-rays transmitted through e.g. a human body is converted to visible light, i.e., fluorescence, by a scintillator. This fluorescence is converted to signal charge using a photoelectric conversion element such as amorphous silicon (a-Si) photodiode or CCD (charge coupled device) to obtain an X-ray image.

A large amount of X-ray irradiation of the human body may adversely affect the health. Thus, X-ray irradiation of the human body is held down to the minimum necessary. As a result, the intensity of X-rays incident on the X-ray detector is very weak. Thus, the amount of charge outputted from the thin film transistor (TFT) provided in the X-ray detector is very small. In particular, when obtaining an X-ray image intended to observe a moving image, the amount of charge outputted from each pixel is approximately 1 fC. This is likely to cause degradation in the X-ray image due to noise.

In this case, when obtaining an X-ray image, the output signal inevitably contains a large amount of noise. The noise includes e.g. the dark current of the photodiode connected to each pixel, the offset shift occurring inside the integrating amplifier, and the potential shift of the driving signal of the thin film transistor. Such noise increases with the increase of the temperature of the photodiode, the temperature of the integrating amplifier, and the temperature of the control circuit. Increase of noise due to temperature increase is a behavior peculiar to the element containing a semiconductor material.

The X-ray detector includes a large number of circuit elements. The circuit element powered on and turned to the driving state consumes electric power and generates heat. The generated heat increases the temperature inside the housing of the X-ray detector. This results in increasing noise.

In this case, immediately after power-on, the temperature is unstable, which makes it very difficult to correct noise. Thus, the quality of the X-ray image is prone to degradation immediately after power-on.

Furthermore, the temperature around the circuit element increases with the increase of the temperature inside the housing of the X-ray detector. This may also shorten the lifetime of the circuit element.

Thus, a technique has been proposed for providing a heat transfer member between the circuit element and the housing to transfer the generated heat to the housing through the heat transfer member.

However, the heat transfer member provided between the circuit element and the housing directly transfers e.g. external vibration or impact to the circuit element through the heat transfer member. This may break the circuit element. Furthermore, external vibration or impact, for instance, transferred to the substrate (glass substrate) of the X-ray detection part (X-ray detector panel) may also break the substrate.

### [Citation List]

### [Patent Literature]

[Patent Literature 1] Japanese patent No.3957803

### [Summary of Invention]

### [Technical Problem]

The problem to be solved by the invention is to provide a radiation detector capable of suppressing temperature increase inside the housing.

### [Technical Solution]

According to the embodiment, a radiation detector includes a radiation detection part converting incident radiation to signal charge, a circuit part generating a radiation image based on the signal charge, a support plate supporting the radiation detection part on a first surface and supporting the circuit part on a second surface on an opposite side from the first surface, and a heat conduction part provided between a substrate provided in the circuit part and the second surface.

### [Brief Description of Drawings]

[FIG. 1]

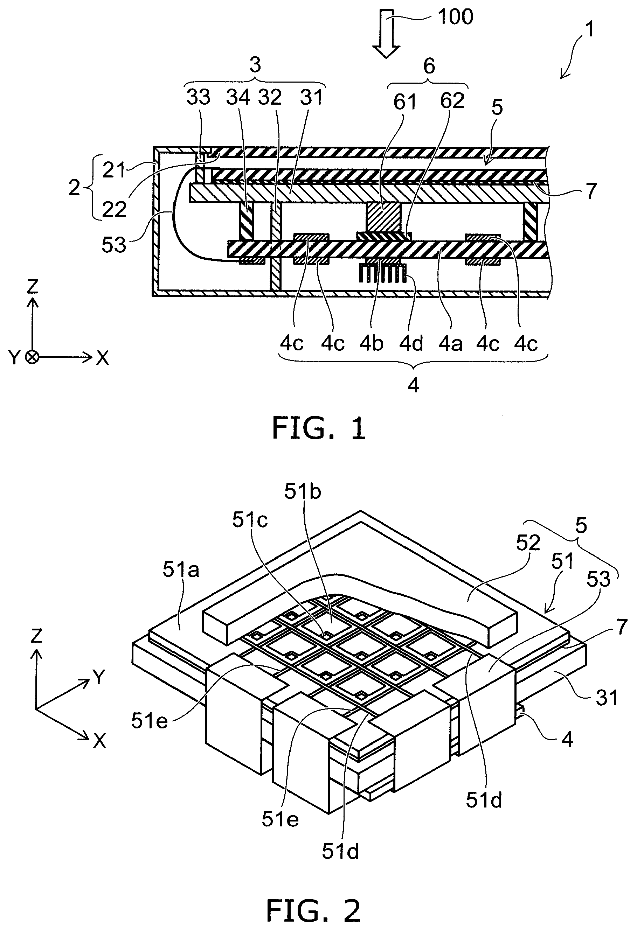

   FIG. 1 is a schematic sectional view for illustrating the X-ray detector according to the embodiment.
[FIG. 2]
   FIG. 2 is a schematic perspective view for illustrating the X-ray detection part.
[FIG. 3]

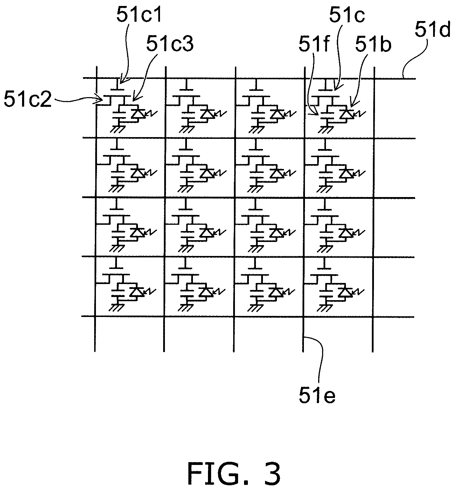

   FIG. 3 is a circuit diagram of the X-ray detection part.
[FIG. 4]

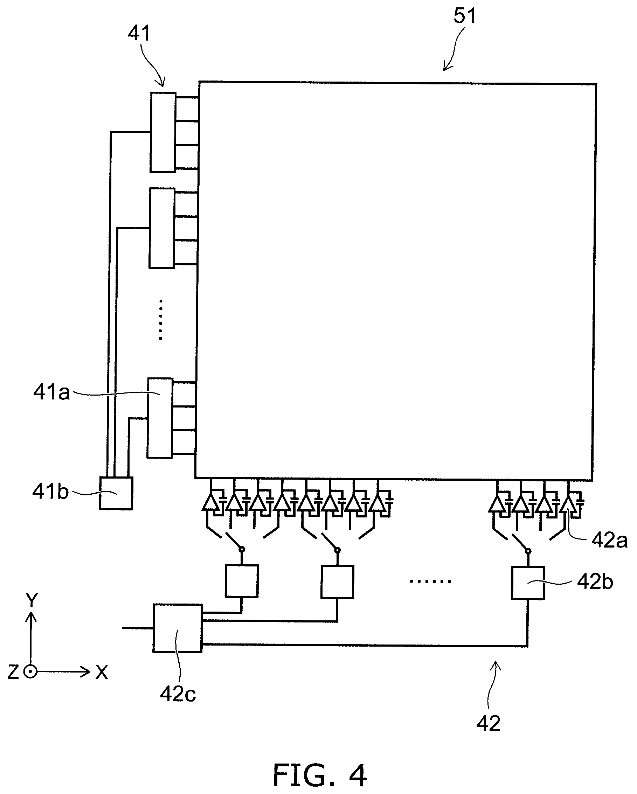

   FIG. 4 is a block diagram of the X-ray detector.

### [Description of Embodiments]

Various embodiments will be described hereinafter with reference to the accompanying drawings. In the respective drawings, the same components are labeled with like reference numerals, and detailed description thereof is omitted as appropriate.

The radiation detector according to the embodiment of the invention is applicable to various types of radiation such as γ-rays besides X-rays. Examples are described herein with reference to X-rays as a representative of radiation. Thus, the following embodiment is applicable to other radiation by replacing the term "X-ray" with "other radiation".

The arrows X, Y, and Z in the figures represent three directions orthogonal to each other.

The X-ray detector 1 illustrated below is a flat X-ray sensor for detecting an X-ray image.

Flat X-ray sensors are broadly classified into the direct conversion type and the indirect conversion type.

In the direct conversion type, X-rays are directly converted to signal charge by a photoconductive film made of e.g. amorphous selenium semiconductor (a-Se), and the signal charge is led to a charge storage capacitor. That is, in the direct conversion type, the photoconductive charge (signal charge) generated inside the photoconductive film in response to incident X-rays is directly led to the charge storage capacitor by high electric field.

In the indirect conversion type, X-rays are converted to fluorescence (visible light) by a scintillator. The visible light is converted to signal charge by a photoelectric conversion element such as a photodiode. The signal charge is led to a charge storage capacitor.

As an example, the following embodiment is illustrated with reference to an example including an X-ray detection part 5 of the indirect conversion type. However, the embodiment is also applicable to the case of including an X-ray detection part of the direct conversion type.

The X-ray detector 1 as a radiation detector can be used for e.g. general medical purposes. However, the X-ray detector 1 is not limited to a particular purpose as long as including a radiation detection part (X-ray detection part).

FIG. 1 is a schematic sectional view for illustrating the X-ray detector 1 according to the embodiment.

FIG. 2 is a schematic perspective view for illustrating the X-ray detection part 5.

FIG. 3 is a circuit diagram of the X-ray detection part 5.

FIG. 4 is a block diagram of the X-ray detector 1.

As shown in FIG. 1, the X-ray detector 1 includes a housing 2, a support part 3, a circuit part 4, an X-ray detection part 5, a heat conduction part 6, and a heat insulation part 7.

The housing 2 includes a body part 21 and an incident window 22.

The body part 21 is shaped like a box and includes an opening for providing the incident window 22 in one surface.

The body part 21 can be formed from a metal such as stainless steel.

The body part 21 can also be formed from e.g. polyphenylene sulfide resin, polycarbonate resin, or carbon-fiber-reinforced plastic (CFRP). However, in view of heat dissipation capability described later, the body part 21 is preferably formed from e.g. a metal having high thermal conductivity.

The incident window 22 is shaped like a plate and provided so as to occlude the opening of the body part 21.

The incident window 22 is transmissive to X-rays 100. The incident window 22 can be formed from a material having low X-ray absorptance. The incident window 22 can be formed from e.g. carbon-fiber-reinforced plastic.

The support part 3 includes a support plate 31, a strut 32, a strut 33, and a strut 34.

The support plate 31 is shaped like a plate and provided inside the housing 2. The X-ray detection part 5 is provided on the surface of the support plate 31 on the incident window 22 side (corresponding to an example of the first surface). The circuit part 4 is provided via the strut 34 on the surface of the support plate 31 on the opposite side from the incident window 22 side (corresponding to an example of the second surface).

The strut 32 is shaped like a column.

One end of the strut 32 is provided on the inner wall of the body part 21 on the opposite side from the side provided with the opening. The other end of the strut 32 is provided on the support plate 31.

The strut 33 is shaped like a block.

One end of the strut 33 is provided on the inner wall of the body part 21 on the side provided with the opening. The other end of the strut 33 is provided on the support plate 31.

The strut 32 and the strut 33 support the support plate 31 at a prescribed position inside the housing 2.

The strut 34 is shaped like a column.

One end of the strut 34 is provided on the support plate 31. The other end of the strut 34 is provided on the substrate 4a of the circuit part 4.

The strut 34 supports the circuit part 4 at a prescribed position inside the housing 2.

The material of the support plate 31, the strut 32, the strut 33, and the strut 34 is not particularly limited as long as having a certain level of rigidity. However, in view of heat dissipation capability described later, the material of the support plate 31, the strut 32, the strut 33, and the strut 34 is preferably e.g. a metal having high thermal conductivity. The material of the support plate 31, the strut 32, the strut 33, and the strut 34 can be e.g. aluminum, aluminum alloy, copper, or copper alloy.

On the other hand, in view of suppressing the transfer of e.g. external vibration or impact to the circuit part 4, the material of the strut 34 can be e.g. a resin.

The circuit part 4 includes a substrate 4a, a circuit element 4b, a circuit element 4c, and a heat dissipation fin 4d.

The substrate 4a can be e.g. a printed wiring substrate.

The circuit element 4b and the circuit element 4c mounted on the substrate 4a constitute a control circuit 41 and an amplification-conversion circuit 42 described later.

The circuit element 4b and the circuit element 4c can be e.g. a resistor, capacitor, coil, or semiconductor element.

The circuit element 4b and the circuit element 4c generate heat when powered on.

In this case, the circuit element 4b can be a circuit element generating a large amount of heat (heat-generating circuit element). The circuit element 4b can be e.g. CPU (central processing unit) or FPGA (field-programmable gate array).

The heat dissipation fin 4d is provided on the circuit element 4b.

As shown in FIG. 4, the control circuit 41 includes a plurality of gate drivers 41a and a row select circuit 41b.

The gate driver 41a applies a control signal to the corresponding control line (or gate line) 51d.

In accordance with the scan direction of the X-ray image, the row select circuit 41b sends an external control signal to the corresponding gate driver 41a.

For instance, the control circuit 41 sequentially applies a control signal for each control line 51d through the flexible printed substrate 53 and the control line 51d described later. The control signal applied to the control line 51d turns on the thin film transistor 51c. This enables receiving the image data signal from the photoelectric conversion element 51b.

The amplification-conversion circuit 42 includes a plurality of integrating amplifiers 42a, a plurality of A/D converters 42b, and an image synthesis circuit 42c.

The integrating amplifier 42a amplifies the image data signal from each photoelectric conversion element 51b for output. The image data signal outputted from the integrating amplifier 42a is subjected to parallel/serial conversion and inputted to the A/D converter 42b.

The A/D converter 42b converts the inputted image data signal (analog signal) to a digital signal.

The image synthesis circuit 42c generates an X-ray image based on the image data signal (digital signal) converted by the A/D converters 42b.

For instance, the control circuit 41 controls the operation, i.e., the on-state and off-state, of the thin film transistor 51c described later.

The amplification-conversion circuit 42 sequentially receives and amplifies an image data signal from each photoelectric conversion element 51b through the data line (or signal line) 51e and the flexible printed substrate 53 described later. The amplification-conversion circuit 42 then converts the amplified image data signal to a digital signal. Furthermore, the amplification-conversion circuit 42 generates an X-ray image based on the image data signal converted to the digital signal.

That is, the circuit part 4 generates an X-ray image based on the signal charge from the X-ray detection part 5.

The X-ray detection part 5 converts incident X-rays to signal charge.

As shown in FIG. 2 and FIG. 3, the X-ray detection part 5 includes an array substrate 51, a scintillator 52, and a flexible printed substrate 53.

The array substrate 51 includes a substrate 51a, a photoelectric conversion element 51b, a thin film transistor 51c, a control line 51d, and a data line 51e.

The substrate 51a is shaped like a plate and formed from e.g. glass.

The photoelectric conversion element 51b and the thin film transistor 51c are provided in a plurality of pairs on the surface of the substrate 51a on the incident window 22 side. One pair of the photoelectric conversion element 51b and the thin film transistor 51c is provided in the region defined by the control line 51d and the data line 51e. A plurality of pairs of photoelectric conversion elements 51b and thin film transistors 51c are arranged in a matrix. One pair of the photoelectric conversion element 51b and the thin film transistor 51c corresponds to one pixel.

A storage capacitor 51f for storing signal charge converted in the photoelectric conversion element 51b can be provided. However, depending on the capacitance of the photoelectric conversion element 51b, the photoelectric conversion element 51b can double as storage capacitor 51f.

The photoelectric conversion element 51b can be e.g. a photodiode.

The thin film transistor 51c performs switching between storage and release of charge generated in response to fluorescence incident on the photoelectric conversion element 51b. The thin film transistor 51c can include a semiconductor material such as amorphous silicon (a-Si) and polysilicon (P-Si). The thin film transistor 51c includes a gate electrode 51c1, a source electrode 51c2, and a drain electrode 51c3. The gate electrode 51c1 of the thin film transistor 51c is electrically connected to the corresponding control line 51d. The source electrode 51c2 of the thin film transistor 51c is electrically connected to the corresponding data line 51e. The drain electrode 51c3 of the thin film transistor 51c is electrically connected to the corresponding photoelectric conversion element 51b and storage capacitor 51f.

The control line 51d is provided in a plurality. The control lines 51d are provided in parallel with a prescribed spacing from each other. The control line 51d extends in the X-direction (e.g., row direction).

The data line 51e is provided in a plurality. The data lines 51e are provided in parallel with a prescribed spacing from each other. The data line 51e extends in the Y-direction (e.g., column direction) orthogonal to the X-direction.

The scintillator 52 is provided on the photoelectric conversion element 51b. The scintillator 52 converts incident X-rays to fluorescent, i.e., visible light. The scintillator 52 is provided so as to cover the region provided with a plurality of photoelectric conversion elements 51b on the substrate 51a.

The scintillator 52 can be formed from e.g. cesium iodide (CsI):thallium (TI) or sodium iodide (NaI):thallium (TI). In this case, a collection of columnar crystals can be formed by e.g. vacuum evaporation technique.

The scintillator 52 can also be formed from e.g. gadolinium oxysulfide (Gd₂O₂S).

The flexible printed substrate 53 electrically connects each of a plurality of control lines 51d to the control circuit 41 provided in the circuit part 4.

The flexible printed substrate 53 electrically connects each of a plurality of data lines 51e to the amplification-conversion circuit 42 provided in the circuit part 4.

In general, the X-ray detector 1 requires a large amount of power. This is because a large number of integrating amplifiers 42a, and the A/D converters 42b and the image synthesis circuit 42c processing a large amount of digital signals, require a large amount of power. In particular, the integrating amplifier 42a is required to be of high speed and low noise. Thus, the integrating amplifier 42a needs to be of the class-A amplifier structure, which causes high power consumption.

A large part of the power inputted to the integrating amplifiers 42a, the A/D converters 42b, and the image synthesis circuit 42c is converted to heat and released inside the housing 2.

Thus, when the X-ray detector 1 turns from the standby state or non-energized state to the driving state or energized state, the temperature inside the housing 2 gradually increases. Then, when the temperature inside the housing 2 increases to a certain temperature, the amount of heat generation becomes equal to the amount of heat dissipation. Thus, the temperature inside the housing 2 becomes nearly constant.

In this case, the heat accumulated inside the housing 2 can be released by providing a heat dissipation mechanism based on e.g. water cooling or air cooling.

However, it is difficult to provide a heat dissipation mechanism in the X-ray detector 1. Thus, the temperature increase inside the housing 2 may become large. That is, the maximum attained temperature inside the housing 2 may become too high.

In many components provided in the X-ray detector 1 such as the photoelectric conversion element 51b, the thin film transistor 51c, the control circuit 41, and the amplification-conversion circuit 42, the characteristics significantly change with the temperature change. In particular, the characteristics change of the photodiode (photoelectric conversion element 51b) and the characteristics change of the integrating amplifier 42a provided in the amplification-conversion circuit 42 significantly affect the quality of the generated X-ray image.

Here, X-ray irradiation of the human body is held down to the minimum necessary. Thus, the intensity of X-rays incident on the X-ray detector 1 is very weak. Accordingly, the image data signal outputted based on the incident X-rays is also very small. As a result, the ratio (S/N ratio) of the image data signal to the dark current may be too low unless the dark current of the photoelectric conversion element 51b is sufficiently small.

Thus, in the photoelectric conversion element 51b used in the X-ray detector 1, the dark current generated under no incident fluorescence is required to be very small.

However, the photoelectric conversion element 51b used in the X-ray detector 1 is made of a semiconductor film including a semiconductor material such as amorphous silicon. Thus, the photoelectric conversion element 51b has a characteristic inherent to the semiconductor material, i.e., the dark current increases with the temperature increase.

For instance, the dark current value of the photodiode at 20°C is approximately 30 fA/mm². However, the dark current value of the photodiode at 30°C is approximately 128 fA/mm². The dark current value of the photodiode at 40°C is approximately 430 fA/mm².

The property of the dark current increasing with the temperature increase is inherent to the semiconductor material, and is difficult to avoid.

In this case, the dark current value can be corrected by e.g. a correction circuit, not shown, provided in the X-ray detector 1. However, when the dark current value changes significantly, the correction is difficult. This may deteriorate the contrast of the X-ray image outputted ultimately.

Furthermore, when the temperature increases, the dark current value of all the photodiodes is not subjected to the same change. In general, each photodiode is subjected to a different increase in the dark current value.

Thus, artifacts such as smear and unevenness are mixed in the outputted X-ray image with the temperature increase. This may significantly impair the quality of the X-ray image.

Furthermore, the integrating amplifier 42a provided in the amplification-conversion circuit 42 is also composed of a semiconductor element. Thus, the offset value of the integrating amplifier 42a changes with the temperature increase. The offset value of the integrating amplifier 42a has an effect similar to that of the dark current value of the photodiode. Thus, the temperature increase may significantly impair the quality of the X-ray image.

Thus, in the X-ray detector 1 according to the embodiment, a heat conduction part 6 is provided to suppress the temperature increase inside the housing 2.

As shown in FIG. 1, the heat conduction part 6 includes a conduction part 61 and a buffering part 62.

The conduction part 61 thermally joins the support part 3 with the circuit part 4.

The conduction part 61 is provided between the support plate 31 of the support part 3 and the substrate 4a of the circuit part 4.

The conduction part 61 is formed from a material having high thermal conductivity. The conduction part 61 can be formed from a metal such as aluminum, aluminum alloy, copper, and copper alloy.

The buffering part 62 is provided between the conduction part 61 and the substrate 4a of the circuit part 4.

The buffering part 62 is provided to suppress the transfer of e.g. external vibration or impact to the circuit part 4 through the conduction part 61.

The buffering part 62 is preferably formed from a material absorbing external force and not preventing thermal conduction.

The buffering part 62 can include e.g. a resin.

In this case, the buffering part 62 can include e.g. silicone rubber, silicone-based grease, silicone-based oil compound, or ceramic particles.

The buffering part 62 including such a material can suppress the transfer of e.g. external vibration or impact to the circuit part 4. Furthermore, the buffering part 62 facilitates transferring heat from the circuit part 4 to the support part 3.

The buffering part 62 can be provided at least one of the region between the conduction part 61 and the substrate 4a of the circuit part 4 and the region between the conduction part 61 and the support plate 31 of the support part 3.

However, providing the buffering part 62 on one end part side of the conduction part 61 can improve heat dissipation capability compared with the case of providing the buffering part 62 on both end part sides.

In this case, the buffering part 62 provided between the conduction part 61 and the substrate 4a of the circuit part 4 can suppress more effectively the mechanical stress acting on the circuit part 4.

The area of the conduction part 61 on the side in contact with the buffering part 62 can be made different from the area of the buffering part 62 on the side in contact with the conduction part 61.

When the areas of the contact portions are different from each other, the contact area between the conduction part 61 and the buffering part 62 can be kept constant even if a misalignment occurs therebetween. This can suppress variation in heat dissipation characteristics due to assembly error.

In this case, the area of the conduction part 61 on the side in contact with the buffering part 62 is preferably made smaller than the area of the buffering part 62 on the side in contact with the conduction part 61.

When the area of the contact portion of the conduction part 61 is small, contact between the conduction part 61 and the circuit part 4 can be prevented even if a misalignment between the conduction part 61 and the buffering part 62 occurs in the assembly process. This can suppress the mechanical stress applied to the circuit part 4 due to assembly error.

The heat conduction part 6 is preferably provided on the opposite side of the substrate 4a from the region provided with the circuit element 4b.

For instance, the heat conduction part 6 can be provided opposite to the circuit element 4b across the circuit part 4.

The heat conduction part 6 provided close to the circuit element 4b can locally release heat from the portion of the circuit part 4 having a particularly high temperature. Furthermore, the heat conduction part 6 provided close to the portion of the circuit part 4 having a particularly high temperature can improve heat dissipation capability.

As shown in FIG. 1, the circuit element 4b is provided with a heat dissipation fin 4d. Heat is released from the circuit element 4b through the heat dissipation fin 4d to the inside of the housing 2. The heat is then transferred to the housing 2 by e.g. convection and released outside from the housing 2.

On the other hand, heat is transferred from the circuit element 4b to the heat conduction part 6. The heat is then transferred through the support plate 31, the strut 32, and the strut 33 and released outside from the housing 2. That is, the heat dissipation through the heat conduction part 6 is based primarily on thermal conduction. Thus, more efficient heat dissipation can be performed.

This can lower the maximum attained temperature inside the housing 2.

It is sufficient that at least one heat conduction part 6 be provided between the support plate 31 of the support part 3 and the substrate 4a of the circuit part 4.

In this case, if a plurality of circuit elements 4b generating a large amount of heat are provided, the heat conduction part 6 can be provided for each of the plurality of circuit elements 4b.

The heat conduction part 6 can also be provided for the circuit element 4c generating a small amount of heat.

The heat insulation part 7 is shaped like a sheet and provided between the X-ray detection part 5 (array substrate 51) and the support part 3 (support plate 31).

The heat insulation part 7 suppresses that the heat transferred to the support plate 31 through the heat conduction part 6 is transferred to the X-ray detection part 5.

The heat insulation part 7 can be formed from a material having low thermal conductivity. The heat insulation part 7 can be formed from e.g. a resin such as silicone rubber.

In this case, the heat insulation part 7 formed from a soft material such as silicone rubber can also reduce the mechanical stress at the time of attaching the X-ray detection part 5.

Next, the function of the X-ray detector 1 is illustrated.

First, at the initial state, charge is stored in the storage capacitor 51f. A reverse bias voltage is applied to the photoelectric conversion element 51b parallel connected to the storage capacitor 51f. The voltage applied to the photoelectric conversion element 51b is equal to the voltage applied to the data line 51e. The photoelectric conversion element 51b is e.g. a photodiode, which is a type of diode. Thus, little current flows therein under application of reverse bias voltage. Accordingly, the charge stored in the storage capacitor 51f is held without decrease.

X-rays 100 are incident on the scintillator 52 through the incident window 22. Then, high-energy X-rays 100 are converted to low-energy fluorescence (visible light) inside the scintillator 52. Part of the fluorescence generated inside the scintillator 52 is incident on the photoelectric conversion element 51b.

The fluorescence incident on the photoelectric conversion element 51b is converted to charge composed of electrons and holes inside the photoelectric conversion element 51b. The electrons and holes travel along the direction of the electric field formed by the storage capacitor 51f and reach the opposite terminals of the photoelectric conversion element 51b, respectively. Thus, a current flows inside the photoelectric conversion element 51b.

The current flowing inside the photoelectric conversion element 51b flows into the parallel connected storage capacitor 51f. The current flowing into the storage capacitor 51f cancels the charge stored in the storage capacitor 51f. This decreases the charge stored in the storage capacitor 51f. The potential difference between the opposite terminals of the storage capacitor 51f also decreases compared with the initial state.

The plurality of control lines 51d are electrically connected to the corresponding gate drivers 41a. The gate drivers 41a sequentially change the potential of the plurality of control lines 51d. That is, the gate drivers 41a sequentially apply a control signal to the plurality of control lines 51d. In this case, at a particular time, the potential of only one control line 51d is changed by the gate drivers 41a. The region between the source electrode 51c2 and the drain electrode 51c3 of the thin film transistor 51c parallel connected to the data line 51e corresponding to the control line 51d with the changed potential turns from the off-state (insulating state) to the on-state (conducting state).

A prescribed voltage is applied to each data line 51e. The voltage applied to the data line 51e is applied to the storage capacitor 51f through the thin film transistor 51c electrically connected to the control line 51d with the changed potential.

In the initial state, the storage capacitor 51f is placed at the same potential as the data line 51e. Thus, no charge is carried from the data line 51e to the storage capacitor 51f when the amount of charge of the storage capacitor 51f is not changed from the initial state.

On the other hand, the amount of charge is decreased in the storage capacitor 51f parallel connected to the photoelectric conversion element 51b irradiated with fluorescence. That is, the amount of charge of the storage capacitor 51f parallel connected to the photoelectric conversion element 51b irradiated with fluorescence is changed from the initial state. Thus, charge is carried from the data line 51e to the storage capacitor 51f through the thin film transistor 51c turned to the on-state. As a result, the amount of charge stored in the storage capacitor 51f returns to the initial state. The carried charge flows in the data line 51e and is outputted toward the integrating amplifier 42a as an image data signal.

The plurality of data lines 51e are electrically connected to the corresponding integrating amplifiers 42a.

The integrating amplifier 42a integrates the current flowing within a given time interval and outputs a voltage corresponding to the integral value. That is, the integrating amplifier 42a converts the amount of charge flowing in the data line 51e within a given time interval to a voltage value. As a result, the signal charge (image data signal) generated inside the photoelectric conversion element 51b is converted to potential information by the integrating amplifier 42a.

The potential information converted by the integrating amplifiers 42a is sequentially converted to a digital signal by the A/D converters 42b. The digitized image data signals are synthesized into an X-ray image by the image synthesis circuit 42c. For instance, the image synthesis circuit 42c sequentially synthesizes the digitized image data signals in accordance with the column and row of the pixels to generate an X-ray image. The electrical signal associated with the generated X-ray image is outputted toward external equipment such as a display device, not shown.

The electrical signal associated with the X-ray image outputted toward external equipment can be easily turned to an image by e.g. an ordinary display device. Thus, the X-ray image obtained by X-ray irradiation can be observed as an image of visible light.

In the X-ray detector 1 according to the embodiment, the circuit part 4 and the X-ray detection part 5 are provided on the support plate 31 having high flexural rigidity. The heat conduction part 6 is provided between the support plate 31 of the support part 3 and the substrate 4a of the circuit part 4.

This can reduce the mechanical stress under application of e.g. external vibration or impact. Furthermore, the heat generated in the circuit part 4 can be transferred to the support plate 31 having high heat capacity. The heat transferred to the support plate 31 can be transferred to the housing 2 by thermal conduction and released outside from the housing 2.

This can improve the mechanical strength of the components provided inside the housing 2, and suppress the temperature increase inside the housing 2.

Furthermore, this can also shorten the time until the temperature inside the housing 2 is stabilized.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A radiation detector comprising:
a radiation detection part converting incident radiation to signal charge;
a circuit part generating a radiation image based on the signal charge;
a support plate supporting the radiation detection part on a first surface and supporting the circuit part on a second surface on an opposite side from the first surface; and
a heat conduction part provided between a substrate provided in the circuit part and the second surface.

2. The radiation detector according to claim 1, wherein the heat conduction part includes a conduction part including a metal and a buffering part including a resin.

3. The radiation detector according to claim 2, wherein the buffering part is provided between the substrate and the conduction part.

4. The radiation detector according to claim 2, wherein an area of the conduction part on a side in contact with the buffering part is different from an area of the buffering part on a side in contact with the conduction part.

5. The radiation detector according to claim 2, wherein an area of the conduction part on a side in contact with the buffering part is smaller than an area of the buffering part on a side in contact with the conduction part.

6. The radiation detector according to claim 1, further comprising:
a circuit element provided on the substrate and generating heat when powered on,
the heat conduction part being provided on an opposite side of the substrate from a region provided with the circuit element.

7. The radiation detector according to claim 6, further comprising:
a heat dissipation fin provided on the circuit element.

8. The radiation detector according to claim 2, wherein the buffering part includes at least one selected from the group consisting of silicone rubber, silicone-based grease, silicone-based oil compound, and a ceramic particle.
